Europäisches Patentamt

European Patent Office

Office européen des brevets

(19)

(11) EP 1 515 267 A2

(12) EUROPEAN PATENT APPLICATION

(43) Date of publication:
16.03.2005 Bulletin 2005/11

(51) Int Cl.⁷: **G06K 19/06**, G06K 19/077, G07C 9/00, C12Q 1/68, B42D 15/10

(21) Application number: 04028462.2

(22) Date of filing: 17.05.2001

(84) Designated Contracting States:
AT BE CH CY DE DK ES FI FR GB GR IE IT LI LU MC NL PT SE TR

(30) Priority: 01.03.2001 JP 2001056567
22.03.2001 JP 2001083752

(62) Document number(s) of the earlier application(s) in accordance with Art. 76 EPC:
01111913.8 / 1 237 327

(71) Applicants:
• NTT Data Technology Corporation
Minato-ku, Tokyo 107-0052 (JP)
• I D Technica Co., Ltd.
Tokyo 101-0047 (JP)

(72) Inventors:
• Itakura, Yukio, NTT DATA TECHNOLOGY CORP.
Tokyo 107-0052 (JP)
• Itoh, Hisao
Chiyoda-ku Tokyo 101-0047 (JP)
• Nagashima, Toshio,c/o NTT Data Technology Corp.
Tokyo 107-0052 (JP)

(74) Representative: HOFFMANN - EITLE
Patent- und Rechtsanwälte
Arabellastrasse 4
81925 München (DE)

Remarks:
This application was filed on 01 - 12 - 2004 as a divisional application to the application mentioned under INID code 62.

(54) **Method and system for individual authentication and digital signature utilizing article having DNA based ID information mark**

(57) An individual authentication and digital signature system utilizing an article having an identification mark that encodes genome related information capable of identifying an individual to be identified is disclosed. The identification mark can be provided in a form of a two dimensional bar code or an IC equipped medium. The identification mark can be printed by using DNA mixed ink containing DNA or DNA fragment directly acquired from the individual. The article can also have a recording medium for recording the genome related information, which can be an IC chip provided on the article. The genome related information obtained from the identification mark, the DNA mixed ink and the recording medium can be used in authenticating the individual, the article, or a product to which the article is to be attached.

FIG.2

**Description**

BACKGROUND OF THE INVENTION

FIELD OF THE INVENTION

The present invention relates to an individual authentication and digital signature system utilizing a DNA information for uniquely identifying an individual, and an authentication system for authenticating a product at a time of a product purchase, for example, by utilizing a DNA information for uniquely identifying an individual.

DESCRIPTION OF THE RELATED ART

Conventionally, the biological information such as that of fingerprint, iris, and retina have been used as information for identifying an individual that can be acquired from that individual. Such biological information is acquired as analog information, and it has been difficult to produce digital data capable of uniquely identifying each individual from such analog information because of the wide individual differences and the nonuniform conditions of the information acquisition environment.

For example, in the case of digitizing the biological information which is the acquired analog information, there is a need to carry out the analog/digital conversion of characteristic points, relative coordinates or thresholds in the biological information acquired from fingerprint, iris, retina, etc., using prescribed criteria. However, it is difficult to set uniform criteria and conditions because the biological information has the wide individual differences.

For this reason, there is a natural limit to the identification accuracy in the individual authentication using the biological information. For example, in the case of the individual authentication using fingerprint, it is said that the the individual can be correctly identified out of approximately 500,000, and any attempt to improve the individual identification rate further will also increases the rate for being rejected as others which makes the individual authentication impractical.

Also, in the case of the individual authentication and the digital signing in the electronic commerce where the cryptographic techniques are usually used, it is essential to use the digital information, and it is necessary to realize an accuracy capable of identifying an individual out of the population of the entire world. However, the conventional techniques essentially presuppose that the biological information is analog information, and there has been no proposition for directly utilizing the biological information as cryptographic keys that are based on the digital techniques.

On the other hand, a certificate such as personal identification, employee identification, or driver's licence is generally utilized for the individual authentication. In the case of using the certificate, the individual is authenticated as one described in the certificate when the individual possesses the certificate, or when the individual coincides with a photograph of face attached, recorded or printed on the certificate, or when an input (of secret ID number or information on fingerprint, iris, retina, etc.) made by the individual coincides with information attached or recorded on the certificate.

It is also popular to verify the authenticity of a document by sealing the document using one's registered seal.

As far as the DNA information is concerned, it is conventionally handled similarly as the other biological information such as fingerprint, iris, retina, etc., and there has been no proposition to utilize the DNA information by paying attention to the specific properties of the DNA information.

Also, the DNA information usually contains DNA sequence information which is related to the etiological factors or the physical features so that there is a need for consideration regarding the privacy of the individual.

Thus, the biological information such as that of fingerprint, iris, retina, etc. has been acquired as analog information, and the use of this biological information by converting it into digital information has been associated with the problem regarding the uniqueness of the information. For this reason, it has been impossible to utilize such digital information obtained by direct conversion from analog biological information, as a cryptographic key in the individual authentication and the digital signing in the electronic commerce, for example.

Also, the certificate has an advantage that it is convenient for carrying around, but the certificate also has a disadvantage that the mere possession of the certificate cannot establish the authenticity of the individual absolutely because the certificate can be easily lost, stolen, or altered for the purpose of pretending. The same remark also applies to the registered seal.

On the other hand, in recent years, the appearance of fake copies or imitations of branded products on the market is becoming the major social problem. In the conventional product sales, when a consumer wishes to check the authenticity of a product to be purchased, it has been customary to check the brand mark.

However, most of the fake copies or imitations also forge or imitate the brand mark as well, so that the checking of the brand mark is not necessarily an effective way of checking the authenticity of a product. For this reason, it is necessary for a purchaser himself/herself to judge the authenticity of a product by his/her own eyes, but due to the advance of the forging or imitating techniques, it is difficult to judge the authenticity of a product by the eye observation unless the purchaser is thoroughly familiar with these fake copies or imitations.

BRIEF SUMMARY OF THE INVENTION

It is therefore an object of the present invention to provide an article having a DNA based ID information in which the digital information can be directly acquired from the biological information that can identify each individual and utilized for the individual authentication and the digital signature, as well as an individual authentication and digital signature system utilizing such an article having a DNA based ID information.

It is another object of the present invention to provide an ID information indicator which can be utilized for identification of an object to be identified such as authentication of a product, and which is difficult to forge or imitate, as well as an authentication system utilizing such an ID information indicator.

According to one aspect of the present invention there is provided an article having an identification mark that encodes genome related information capable of identifying an individual to be identified.

According to another aspect of the present invention there is provided an authentication method utilizing an article having an identification mark that encodes genome related information capable of identifying an individual to be identified, the method comprising: extracting a first genome related information indicated by the identification mark of the article; and judging authenticity by matching the first genome related information with a second genome related information which is registered in advance or obtained from DNA directly acquired from the individual.

According to another aspect of the present invention there is provided an authentication system utilizing an article having an identification mark that encodes genome related information capable of identifying an individual to be identified, the system comprising: a identification mark reader device configured to extract a first genome related information indicated by the identification mark of the article; and an authentication device configured to judge authenticity by matching the first genome related information with a second genome related information that is registered in advance or obtained from DNA directly acquired from the individual.

Other features and advantages of the present invention will become apparent from the following description taken in conjunction with the accompanying drawings.

BRIEF DESCRIPTION OF THE DRAWINGS

Figs. 1A and 1B are diagrams showing an external appearance of a DNA registered seal IC card according to the first embodiment of the present invention.

Fig. 2 is a block diagram showing an overall configuration of an individual authentication and digital signature system utilizing the DNA registered seal IC card of Figs. 1A and 1B according to the first embodiment of the present invention.

Fig. 3 is a block diagram showing internal configurations of elements constituting the individual authentication and digital signature system of Fig. 2.

Fig. 4 is a diagram showing a processing procedure for authentication using a DNA authentication mark on the DNA registered seal IC card of Figs. 1A and 1B.

Fig. 5 is a diagram showing a processing procedure for the individual authentication in the individual authentication and digital signature system of Fig. 2.

Figs. 6A, 6B, 6C and 6D are diagrams showing various forms for using an ID information indicator according to the second embodiment of the present invention.

Fig. 7 is a flow chart of a processing procedure for authentication in an authentication system according to the second embodiment of the present invention.

Fig. 8 is a block diagram showing a configuration of an authentication system according to the present invention.

DETAILED DESCRIPTION OF THE INVENTION

Now, the first embodiment of the present invention will be described with references to the drawings.

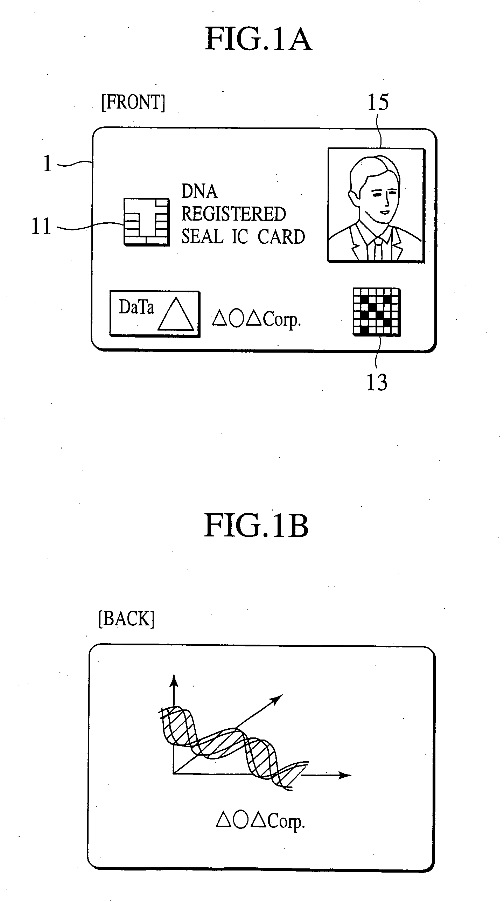

Figs. 1A and 1B show an external appearance of a DNA registered seal IC card that includes a function of the DNA based ID information recording medium according to the first embodiment of the present invention.

As shown in Fig. 1A, an IC chip 11 is embedded at a left center portion on a front face of the DNA registered seal IC card 1, and a terminal pattern for carrying out signal transmission and reception using electric connections is formed on a surface of this IC chip 11. Here, a coil type antenna for carrying out signal transmission and reception may be provided within the DNA registered seal IC card 1 in order to carry out the noncontact signal transmission and reception.

Also, a DNA authentication mark 13 is provided at a lower left portion on the surface of the DNA registered seal IC card 1, and a photograph of face 15 is provided at an upper right portion on the surface of the DNA registered seal IC card 1. Moreover, the entire DNA registered seal IC card 1 is protected by a plastic coating or the like, except for a terminal portion on the IC chip 11.

The DNA authentication mark 13 is a mark in a form of a 2D bar code which is printed by using ink in which DNA of an owner of the DNA registered seal IC card 1 is mixed. This DNA authentication mark 13 can be printed on the DNA registered seal IC card 1 either visibly or invisibly, which is selected according to the intended usage of the DNA registered seal IC card 1. In either case, the 2D bar code is read by using a special scanner.

The DNA to be used here can be the entire DNA as obtained from the mouth cell fragments, for example, without any processing, but it is also possible to use only information on the inter-gene regions by processing the cells for the purpose of protecting the privacy of the owner. Here, the inter-gene regions indicate regions other than genes within the base sequence of the entire DNA of the cells. In this way, it becomes possible to eliminate the genetic information related to the etiological factors or the physical features. The inter-gene regions include microsatellite regions, for example.

Now, functions of the DNA authentication mark 13 will be described.

(1) Authentication function using DNA mixed ink:

(i) Authentication function using ink components:

By the use of special ink, it becomes possible to judge the authenticity of the DNA authentication mark 13 by checking the DNA mixed ink. Here, it is only necessary to judge whether it is authentic or not, so that the authenticity of the DNA authentication mark 13 can be realized by checking the authenticity of the ink using a device with a simple configuration such as a portable detector, for example.

(ii) Authentication function using DNA segment:

It is also possible to judge the authenticity of the DNA authentication mark 13 by analyzing the DNA segment mixed in the DNA mixed ink and comparing it with the DNA of the owner.

(2) Authentication function using 2D bar code:

By reading the 2D bard code, the value of the DNA-ID of the owner can be ascertained. By comparing this value with the DNA-ID obtained from the DNA of the owner, the authenticity of the DNA authentication mark 13 can be judged. In this case, the DNA can be acquired from the owner in advance and a public key generated from information of that DNA can be recorded in the DNA registered seal IC card 1 which is to be carried by the owner, such that the authenticity can be judged by using a judging software without requiring the acquisition of the DNA from the owner at each occasion of the authentication.

Next, the features of the DNA authentication mark 13 will be described.

(1) The DNA authentication mark 13 contains the biological information in a form of the DNA segment of the owner, which has an ability to prove the identity similar to the so called seal of blood, so that it can provide an ultimate individual identification mechanism.

(2) The initial investment including hardware costs for the DNA ink detector and the 2D bar code scanner, a software cost for the judging software, and a commission cost for analysis and generation of the DNA-ID of the owner will be required, but the printing of the 2D bar code can be realized at low cost (about four to five yens per one mark in the case of printing in units of one million) so that this individual authentication scheme can be practiced at a reasonable running cost.

(3) The DNA-ID information is essentially the digital information and the probability for two individuals to have the equivalent value is statistically verified to be sufficiently low according to the ID generation method of this embodiment so that it is possible to realize the individual authentication function with an extremely high authentication accuracy. In addition, the base sequence from which the DNA-ID is generated is highly stable chemically so that its information does not change even after it is dissolved into ink. Moreover, the DNA of the human being is basically unchanged throughout the life so that it can be used as an ultimate ID.

(4) The protection of the privacy can be accounted by using STR (Short Tandem Repeat) information of the DNA as the ID information, because the STR information is an information on portions other than genes which is a personal information totally unrelated to the etiological factors. In addition, it is also possible to avoid handling the STR information in its raw form.

The photograph of face 15 of the owner of the DNA registered seal IC card 1 is either pasted or printed similarly as in the usual name card or certificate, and the DNA authentication mark 13 may be printed by using transparent ink on a surface of the photograph of face 15 in order to prevent illegal acts such as substitution of photograph.

Also, as shown in Fig. 1B, on the back side of the DNA registered seal IC card 1, a mark indicating that the DNA information is handled on this card is printed. It is also possible to indicate information regarding the owner of the DNA registered seal IC card 1 such as a full name, a name of the affiliated company, a contact address, etc., on the front and/or back sides of the card according to needs.

Next, functions of the DNA registered seal IC card 1 will be described.

(1) Individual authentication function using biological information (DNA mixed ink + DNA-ID information 2D bar code):
The DNA-ID code acquired from the DNA is converted into 2D bar code information and printed in a form of a mark identical to the terminal pattern of the IC chip 11 on the registered seal portion of the IC card by using special ink. This special ink contains STR fragments of the DNA acquired from the owner of the DNA registered seal IC card 1 and cultivated, such that the DNA-ID information can be obtained from the printed portion after the printing. In this way, it is possible to determine that the owner of the DNA registered seal IC card 1 as the authentic individual when the DNA-ID code acquired from the owner matches with the 2D bar code.

(2) Function as secret key/public key incorporating the DNA information:
A secret key can be generated by adding a secret random number to the DNA-ID and this secret key and a public key generated from that secret key are stored in the IC chip, and used as keys for decryption of encrypted communications and for the digital signature generation at a time of digital signing.

(3) Individual authentication function using the biological information and the public key (incorporating the DNA information):
The individual authentication can be realized by judging the DNA-ID by using an analyzer machine from the mouth cells acquired by rubbing the mouth mucous membrane of the owner using an applicator, and checking whether the public key can be generated from that DNA information.

Next, the features of the DNA registered seal IC card 1 will be described.

(a) The DNA registered seal IC card 1 has the ultimate strength against the substituting or pretending attack. The DNA registered seal IC card 1 adopts the three-fold security structure provided by the DNA mixed ink, the DNA-ID information 2D bar code and the public key incorporating the DNA information, so that the DNA registered seal IC card 1 is provided with very effective anti-attack measures.

(b) Various security levels available according to needs:
By using the three-fold security structure, arbitrary security level ranging from an elementary level to the strongest level can be realized. An optimal combination of the security levels can be selected according to the requirement of the security system to be constructed.

(c) Usable as lifelong permanent ID card:
The DNA-ID used in this scheme is acquired and generated from a portion of the DNA that is unchanged throughout the lifetime of the owner.

Also, the secret key incorporating the DNA information is generated by adding a secret random number, so that it is difficult to generate the secret key even when the DNA information is acquired by the others. In addition, by periodically changing the secret random number, it is possible to increase the safety level.

(d) Usable as JAVA card:
This IC card is based on the software structure of a JAVA card, so that it is suitable for the customization and the software distribution.

(e) Digital signature function:
The secret key incorporating the DNA-ID information is stored in this IC card, such that the digital signature can be generated using this secret key.

Next, the concept of security grades in the DNA registered seal IC card 1 will be described.

[Grade 0] Simple individual authentication using the photograph of face.

[Grade 1] Authentication of the card using the special ink.

[Grade 2] Matching of the DNA-ID read from the 2D bar code with the public key $Y_A$ obtained from CA (Certificate Authority), The individual is determined as the owner if the public key $Y_A$ can be generated from the DNA-ID.

[Grade 3] Matching of the public key $Y_A$ read from the IC chip with the public key $Y_A$ obtained from CA. The individual is determined as the owner if they coincide.

[Grade 4] Grades 2 and 3, plus the consistency check.

[Grade 5] Grade 3 plus the individual's DNA check.

[Grade 6] Grade 2 plus the individual's DNA check.

[Grade 7] Grade 1 plus the individual's DNA check.

[Grade 8] Arbitrary combination of Grades 1, 2 and 3 plus the individual's DNA check.

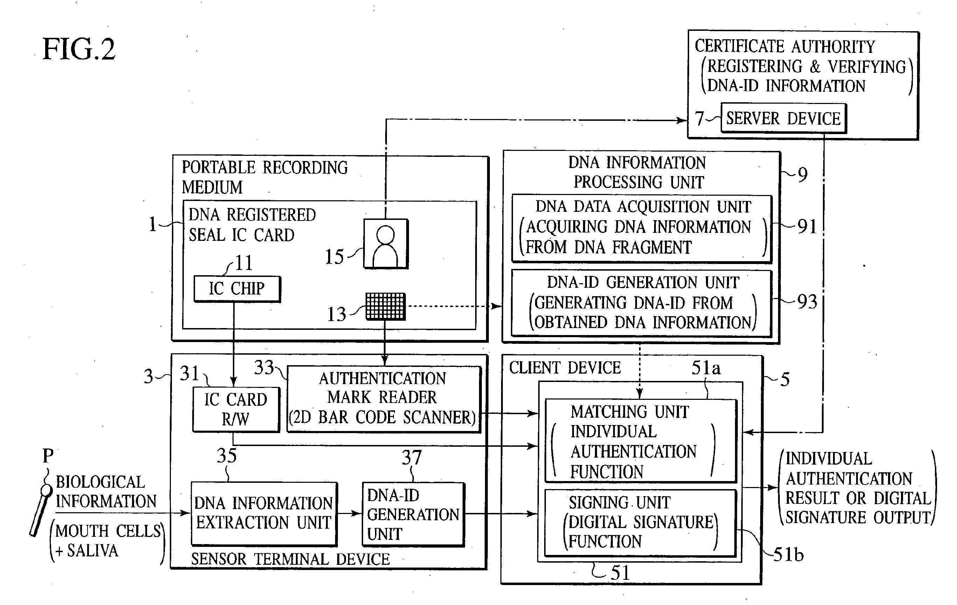

Next, with reference to Fig. 2, a configuration of an individual authentication and digital signature system utilizing the DNA registered seal IC card of Figs. 1A and 1B will be described. This individual authentication and digital signature system comprises the DNA registered seal IC card 1, a sensor terminal device 3, a client device 5, a server device 7 and a DNA information processing unit 9.

The configuration of the DNA registered seal IC card 1 to be used as a portable recording medium is as already described above with reference to Figs. 1A and 1B.

The sensor terminal device 3 has an IC card reader/writer (R/W) 31, an authentication mark reader 33, a DNA information extraction unit 35, and a DNA-ID generation unit 37.

The client device 5 has a client application 51 containing a matching unit 51a with the individual authentication function and a signing unit 51b with the digital signature function.

The server device 7 is provided at the certificate authority (CA) which is an organization for registering and verifying the DNA-ID information.

The DNA information processing unit 9 has a DNA information acquisition unit 91 for acquiring the DNA information from the DNA fragments, and a DNA-ID generation unit 93 for generating the DNA-ID from the acquired DNA information. The DNA information processing unit 9 may be incorporated into the sensor terminal device 3.

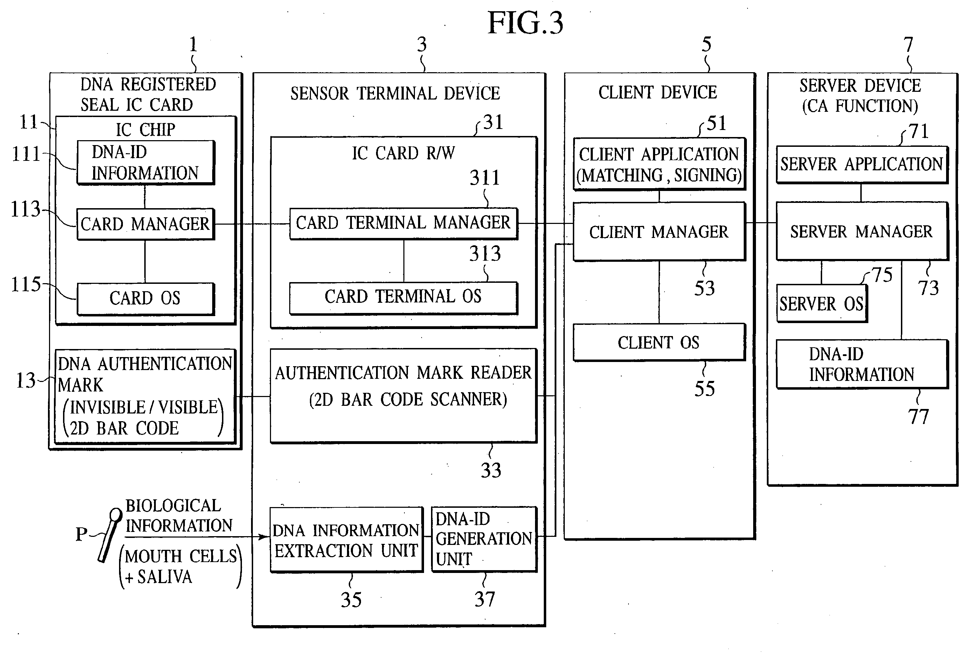

Next, with reference to Fig. 3, the internal configuration of the DNA registered seal IC card 1, the sensor terminal device 3, the client device 5 and the server device 7 that constitute the individual authentication and digital signature system will be described.

The DNA registered seal IC card 1 has the IC chip 11 and the DNA authentication mark 13. The IC chip 11 is tamper resistant, and contains a DNA-ID information 111, a card manager 113, and a card OS 115. The IC chip 11 may also have a key generation function, a certificate authority function, and an X.509 certificate generation function. The DNA information is processed according to the zero knowledge proof algorithm in order to avoid disclosing the secret key to the server device 7.

The DNA-ID information 111 contains the secret key (generated by incorporating the DNA-STR information), the public key (generated by incorporating the DNA-STR information), the individual identification information and the other information (information other than the DNA information), and a public key certificate (issued by the CA), which are stored in a memory of the IC chip 11.

The card manager 113 has a function for generating the DNA-ID information 111 such as the secret key and public key pair incorporating the DNA-STR information, a function for generating the digital signature, and a function for transmitting/receiving the DNA-ID information 111, and comprises programs to be executed on a CPU of the IC chip 11.

The DNA authentication mark 13 is in a form of the 2D bar code (invisible/visible) which contains a card owner specific information (the DNA-ID information + the public key + the individual identification information + the public key certificate), and/or (a hash value of) the public key certificate. There is no need for the 2D bar code to be visible and the 2D bar code may be optically transparent as long as it is readable by the authentication mark reader (2D bar code scanner) 33.

The sensor terminal device 3 has the IC card reader/writer (R/W) 31, the authentication mark reader 33, the DNA information extraction unit 35 and the DNA-ID generation unit 37.

The IC card reader/writer 31 has a card terminal manager 311 and a card terminal OS 313. The card terminal manager 311 comprises a software for transmitting/receiving signals with respect to the DNA registered seal IC card 1 and a software for transmitting/receiving signals with respect to the client device 5.

The authentication mark reader 33 comprises the 2D bar code scanner compatible with invisible/visible 2D bar code, which converts the 2D bar code information printed on the DNA registered seal IC card 1 into digital signals and transmits them to a client manager 53 of the client device 5 to be described below. The 2D bar code scanner may also has a (writer) function for printing the 2D bar code on the DNA registered seal IC card 1.

The client device 5 has a client application 51, a client manager 53 and a client OS 55.

The client manager 53 comprises a client side software to be cooperated with the card terminal manager 311 and a server manager 73.

The client application 51 downloads the DNA-ID information 77 stored in the server device 7 to be described below, and verifies the DNA-ID information 111 in the IC chip 11 or the DNA-ID information obtained from the DNA authentication mark 13 by matching it with the DNA-ID information 77 according to the information given from the card terminal manager 311. This operation will be referred to as the level 1 matching hereafter.

Also, the DNA-ID information 111 or the DNA-ID information obtained from the DNA authentication mark 13 is verified by matching it with the DNA-ID generated from the biological information acquired from the mouth mucous membrane using an applicator P. This operation will be referred to as the level 2 matching hereafter.

Here, the level 1 matching is a relative matching with respect to the CA registered information, and the level 2 matching is the absolute matching with respect to the individual's biological information.

In the case of signing, the individual authentication is carried out by either the level 1 matching or the level 2 matching, and when the individual is confirmed as authentic, the digital signature is generated with respect to the original text of the client by using the DNA-ID secret key.

The server device 7 has a server application 71, a server manager 73, a server OS 75 and the DNA-ID information 77.

The server application 71 comprises software for providing the CA functions including a public key certificate issuing function, a public key disclosure function, and a CRL (Certificate Revocation List) disclosure function, and storing/retrieving the DNA-ID information such as the public key certificate.

The server manager 73 comprises a server side software to be cooperated with the client device 5.

The DNA-ID information 77 contains the public key certificate and (a hash value calculated according to) the DNA-STR information.

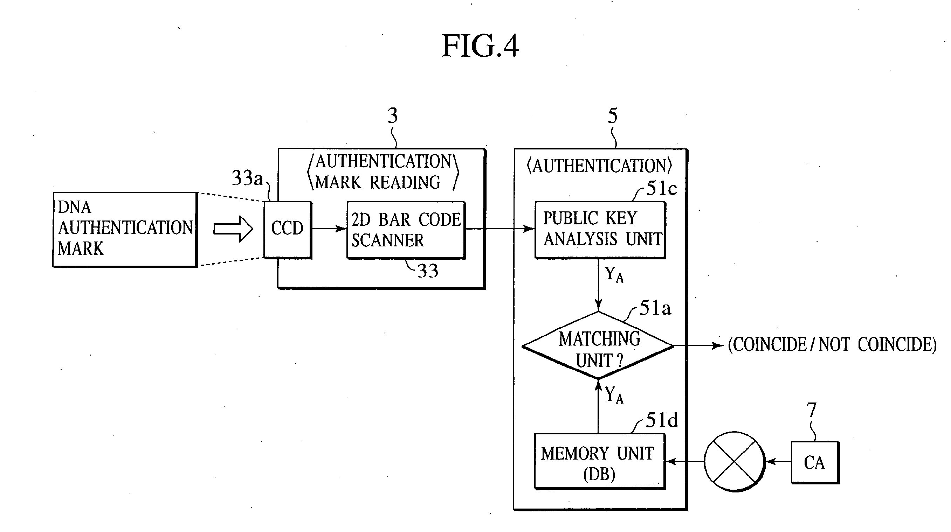

Next, with reference to Fig. 4, the level 1 matching and the level 2 matching in the individual authentication function will be described in detail.

First, the level 1 matching is a relative matching for realizing the individual authentication by matching the (encrypted) DNA-ID recorded in the recording medium with the (encrypted) DNA-ID registered at the CA.

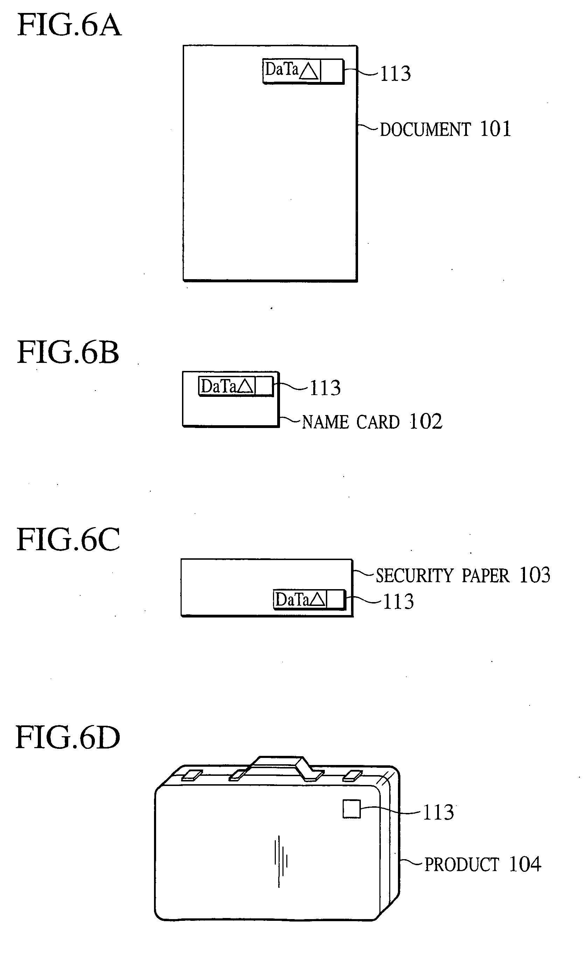

For example, the individual authentication is carried out by matching the (encrypted) DNA-ID information contained in the 2D bar code directly printed on a recording medium (a product label or an IC card) or a product (see Figs. 6A, 6B, 6C, and 6D to be described below) with the (encrypted) DNA-ID information registered at the CA.

It is also possible to carry out the individual authentication by matching the (encrypted) DNA-ID recorded in the IC chip with the (encrypted) DNA-ID information registered at the CA, instead of using the 2D bar code.

Next, the level 2 matching is an absolute matching for realizing the individual authentication by matching the (encrypted) DNA-ID recorded in the recording medium with the (encrypted) DNA-ID generated by acquiring the DNA information directly from the individual at the sensor terminal device 3.

For example, the DNA is dissolved in the ink of the DNA authentication mark on the recording medium, so that the DNA-ID information can be acquired by analyzing the ink at the DNA information processing unit 9. Then, the individual authentication is carried out by matching this information with the (encrypted) DNA-ID generated by acquiring the DNA information directly from the individual at the sensor terminal device 3.

Note that the (encrypted) DNA-ID can be obtained by generating the secret key incorporating the DNA-ID first, and using the public key generated from that secret key.

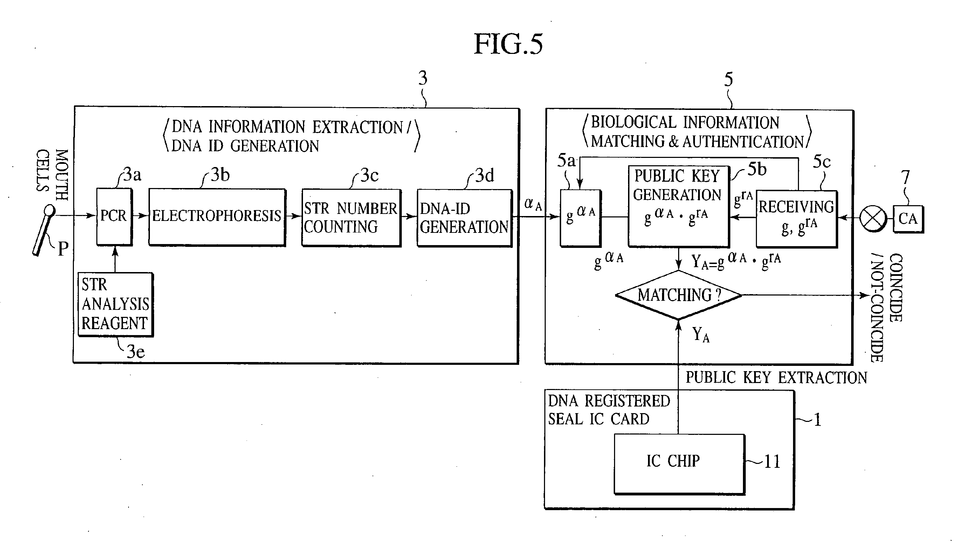

Next, with references to Fig. 4 and Fig. 5, the individual authentication using the digital signature incorporating the biological information will be described.

First, the case of utilizing the level 1 matching for the individual authentication will be described with reference to Fig. 4.

The DNA authentication mark 13 is read by the 2D bar code scanner 33 using CCD 33a or the like, and then the public key $Y_A$ is obtained from the DNA authentication mark 13 at a public key analysis unit 51c of the client device 5. Then, the individual authentication is carried out at a matching unit 51a by matching the public key $Y_A$ obtained from the DNA authentication mark 13 and the public key $Y_A$ obtained from the CA 7 and stored in a memory unit (DB) 51d.

Now, the case of utilizing the level 2 matching for the individual authentication will be described with reference to Fig. 5.

(1) Method for generating the secret key:

The biological information is acquired from the mouth cells or saliva using an applicator P. Then, at the DNA information extraction unit 35 and the DNA-ID generation unit 37, fragments of the prescribed DNA region is exponentially amplified to about 10 million times, by a PCR (Polymerase Chain Reaction) 3a using the STR analysis reagent 3e. Then, the DNA fragments are separated in length of molecules by the electrophoresis 3b, and the STR number counting 3c (the counting of the number of repeats in the STR) is carried out. Then, the ID information generated from the counted value is set as $\alpha_A$.

Namely the ID information $\alpha_A$ uses information on the repeats in the STR which is the non-gene base sequence (the inter-gene region) of the DNA, as a code. The code to be used in this embodiment which is obtained from sixteen STR loci is a numerical value in order of $2^{64}$. There are more than 5000 STR loci so that it is possible to increase the code length by increasing the number of loci to be used.

The secret key is then defined as:

$$\delta_A = \alpha_A + r_A$$

where $r_A$ is the secret random number known only to the individual and managed by the individual. This secret random number processing is employed in order to make the secret key $\delta_A$ truly a secret one that cannot be ascertained by the others, because the biological information can be easily obtained by the others by stealing a hair with the hair root, for example.

(2) Method for generating the public key:

The public key is then defined as:

$$Y_A = g^{\delta_A} \bmod p$$

where g is the primitive root in the multiplicative group $Zp^{.}$, and p is a large prime number.

The public key $Y_A$ is registered at the CA 7 along with g, p, and $g^{rA}$. Here, the reason for registering $g^{rA}$ is to enable the check of the pretending registration by a person having the ID information $\alpha_A$ ' which is different from the ID information $\alpha_A$ , by selecting $r_A$ ' such that $\delta_A = \alpha_A$ ' + $r_A$ '.

(3) Digital signature:

The digital signature with respect to a document m is defined as: (r, s),

$$r = g^K \bmod p, \ s = K^{-1} (h(m) - \delta_A \cdot r) \bmod (p-1)$$

where K is a random number on the multiplicative group Zp' and h() is the hash function.

The verification of the signature can be done as follows.

$$g^{h(m)} \equiv Y_A^{\ r} r^s \bmod p$$

(4) Verifying that the biological information of the individual is incorporated in the digital signature:

Here, it suffices to verify that the biological information of the individual is incorporated in the secret key used in the calculation of the digital signature.

The verifier acquires the biological information from the individual, and generates the ID information $\alpha_A$.

Then, the verifier obtains $Y_A$, g, p and $g^{rA}$ with the signature of the CA 7 from the CA 7.

Then, the verifier calculates the public key as follows.

$$Y_A \equiv g^{\alpha_A} \cdot g^{r_A} \bmod p \ (= g^{\alpha_A + r_A} \bmod p = g^{\delta_A} \bmod p)$$

If this calculated public key coincides with the public key read out from the IC chip 11, it is verified that the ID information $\alpha_A$ of the individual is incorporated in the secret key $\delta_A$ and the public key $Y_A$ can be generated from that secret key $\delta_A$.

If the ID information $\alpha_A$ ' different from the ID information $\alpha_A$ of the individual is used ($\alpha_A \neq \alpha_A$ '), the above equation does not hold, so that the biological information of the individual is not incorporated in the secret key.

As described, according to this embodiment, it becomes possible to realize the individual authentication scheme capable of identifying all the human beings, which can use a system design in which all the human beings can be identified completely in 1:1.

Also, according to this embodiment, it is possible to realize the individual authentication scheme in which the pretending is impossible, so that it is possible to provide a parent and child relationship judgement algorithm in which the pretended parent and child relationship is impossible.

Also, according to this embodiment, it is possible to realize the individual authentication scheme in which the matching algorithm can be disclosed, so that it becomes possible to standardize the matching algorithm that can be disclosed, so as to eliminate cases where the critical identification judgement becomes impossible by using (usually non-disclosed) algorithms that are adopted by various companies.

Also, according to this embodiment, it is possible to realize the individual authentication scheme capable of protecting the privacy even when the DNA information is used, by not using the DNA sequence related to the etiological factors and physical features in the DNA information. Namely, there is a need for consideration regarding the privacy of the individual in the case of handling the DNA information, but this embodiment uses the non-gene base sequence information of the DNA which is totally unrelated to the etiological factors of the physical features, so that it is possible to improve the privacy protection considerably compared with the conventional schemes.

Also, according to this embodiment, it is possible to realize the individual authentication scheme which does not require a special facility such as the biological certificate authority, so that this individual authentication scheme can be used as an additional function to the conventional CA functions by incorporating the biological information in the cryptographic key.

Also, according to this embodiment, it is possible to realize the digital signature scheme incorporating the biological information of the individual (the so called seal of blood function), so that it becomes possible to achieve the effect similar to the seal of blood by generating the digital signature incorporating the biological information of the individual at a time of signing.

Note that, conventionally, there are some references which refer to the DNA information, but these references treat the DNA information similarly as fingerprint, iris, retina, etc., and fail to show any consideration for the digitizing of the DNA information to which the present invention is directed to. Consequently, since it has conventionally been difficult to use the biological information which is analog information such as that of fingerprint, iris, retina, etc., directly as the cryptographic key, there has been no suggestion or implication of treating the DNA information as digital information and using it as the cryptographic key to be used in the individual authentication, for example, as in the present invention.

The individual authentication and digital signature system utilizing the DNA registered seal IC card can be realized by the individual authentication and digital signature system programs, which can be recorded in the recording medium, so that it is possible to improve the distribution of the individual authentication and digital signature programs utilizing the DNA registered seal IC card by distributing the recording medium.

Note that the above description is directed to the exemplary case of realizing the individual authentication and digital signature system utilizing the DNA registered seal IC card, but the present invention is not necessarily limited to this specific case and applicable to any individual authentication and digital signature system utilizing any DNA based ID information recording medium.

As described, the DNA based ID information recording medium and the individual authentication and digital signature system according to this embodiment are provided with the DNA information, so that it is possible to realize the individual authentication and the digital signature which are very accurate by comparing this DNA information with the DNA information acquired from the individual.

Next, the second embodiment of the present invention will be described with references to the drawings.

The second embodiment is directed to the ID information indicator, which is a 2D bar code encoding digital signals that represent the DNA base sequence information for specifying a manufacturer, for example. This ID information indicator is used by directly printing it on a product to be manufactured and sold by that manufacturer, or attaching it in a form of a label or a tag to that product.

For example, the 2D bar code itself 113 or a label or tag of the 2D bar code 113 can be printed or attached on a document 101 as shown in Fig. 6A, a name card 102 as shown in Fig. 6B, a security paper 103 as shown in Fig. 6C, or a product 104 as shown in Fig. 6D.

If the manufacturer is a corporation, the 2D bar code may be produced by using the DNA base sequence information of a president or a director of that manufacturing company, for example.

In this way, the information encoded in the 2D bar code can be easily reproduced any time by extracting the base sequence information from saliva or the like of the individual (an individual manufacturer, a president of a corporation, a director of a manufacturing company, etc.) who has the DNA from which that information was obtained. This 2D bar code has an irregular random element sequence unique to each individual which is difficult for the third part to forge or imitate, so that it can be utilized as effective information for identifying the product of that manufacturer.

Note that the information to be encoded in the 2D bar code may include a product management number, for example, in addition to the base sequence information.

The base sequence information from which the 2D bar code is to be produced can be a combination of the repeat counts of the STRs (Short Tandem Repeats) in the DNA base sequence. The repeat count of the STR has a great individual difference so that it is possible to improve the product identification power in this way.

Also, the DNA base sequence information is digital information in principle, so that the accuracy of the identification can be further improved by utilizing multiple STR loci.

Note that the repeat count of a single STR can be determined by segmenting an entire repeating base sequence by using a primer (a kind of enzyme) corresponding to that STR, and utilizing the PCR (Polymerase Chain Reaction) and the electrophoresis. Then, the STR digital code for the individual identification can be produced by specifying a plurality of STR loci and arranging the obtained repeat counts in a prescribed order.

The 2D bar code may be formed invisible. In this way, it is possible to effectively prevent the third person to forge or imitate the ID information indicator.

The invisible ID information indicator can be printed directly on a product or on a label or tag, by using ink containing fluorescent pigment that emits infrared lights in a specific wavelength range which are invisible to the human eyes.

A form of the ID information indicator for fixing the digital base sequence information is not necessarily limited to the 2D bar code, and IC equipped medium such as RF (Radio Frequency) ID tag or IC card may be utilized for the same effects as in the case of utilizing the 2D bar code. Namely, the information can be recorded in an IC equipped medium in such a manner that it can be read by utilizing the existing device, and this IC equipped medium can be attached to the product,

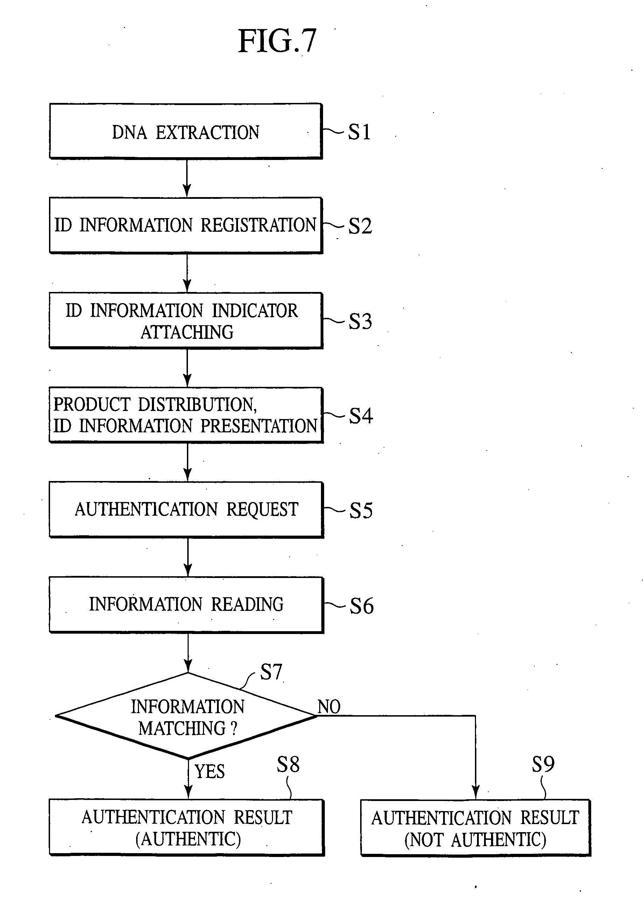

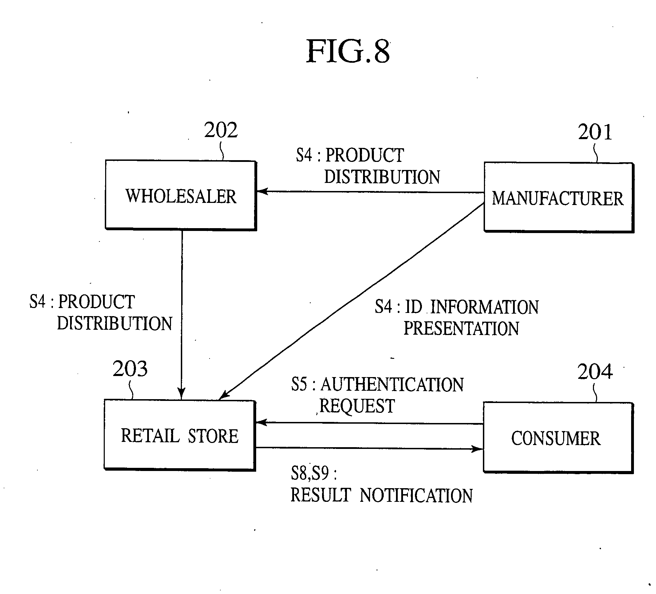

Next, the authentication system according to this embodiment will be described with references to Fig. 7 and Fig. 8. Fig. 7 shows an outline of the operation in this authentication system, and Fig. 8 shows a configuration of this authentication system. This authentication system is directed to an exemplary case where the ID information indicator is attached on the product to be manufactured and sold by a manufacturer 201, such that the authenticity of that product can be judged at a retail store 203.

First, at the step S1, the DNA to be a source of the information for identifying the product is extracted, and the base sequence information is acquired.

Next, at the step S2, the acquired base sequence information is converted into digital signals, and registered as the product ID information. This product ID information is then attached to the product as the ID information indicator at the step S3.

Then, at the step S4, the product with this ID information indicator attached thereto is distributed, and the product ID information is presented to each retail store 203. This product ID information presented to the retail store 203 will be used as matching data.

The product with the ID information indicator attached thereto is supplied to the retail store 203 via a wholesaler 202 or the like, and then purchased by a general consumer 204. At a time of product purchase, the consumer 204 can request the retail store 203 to check the authenticity of that product, by making the authentication request at the step S5.

When the authentication request is made, the retail store 203 reads out the ID information indicator of the product by using a reader device at the step S6, and this read out information is compared with the matching data (the product ID information presented from the manufacturer 201 in advance) at the step S7. If the read out information and the matching data coincide, the retail store 203 notifies the consumer 204 that the product is authentic at the step S8. On the other hand, if the read out information and the matching data do not coincide, the retail store 203 notifies the consumer 204 that the product is not authentic (step S9), and cancel the purchase of that product.

According to this product authentication system, the authenticity of the product can be judged very easily by simply reading the information from the ID information indicator attached on that product. The information to be read out and used in the product authentication is generated according to the DNA base sequence information unique to the individual, which has an irregular random information element sequence, so that it is difficult for the third person to forge or imitate. In this way, it is possible to improve the reliability of the authentication considerably compared with the conventional schemes.

Note that the product authentication at the steps S6 and S7 can be carried out not only in response to the authentication request by the consumer 204 but also when the product arrives at the retail store 203, for example.

Also, the product ID information may not necessarily be presented to the retail store 203, and it is possible to store the product ID information at the manufacturer 201 side, and transfer the information of the ID information indicator read out at the step S6 from the retail store 203 to the manufacturer 201 such that the authentication is carried out by the manufacturer 201 itself. In this way, the product ID information can be maintained within the manufacturer 201 so that a risk of having the product ID information stolen by the third person can be lowered.

The reader device to be used at the step S6 can be a scanner. In this way, the information of the ID information indicator attached on the product can be read out easily at a spot in the retail store 203. Note that, in the case of utilizing the IC based medium as the ID information indicator, the similar effects can also be obtained by using a reader/writer of that medium as the reader device.

The purpose of using the product identification is not necessarily limited to the product authentication, and the product identification may also be utilized for the purpose of the validity judgement for checking whether the product is still in its valid period or not, for example.

Also, in the authentication system of this embodiment, a target of identification is not necessarily limited to a product such as industrial product, and this authentication system can be utilized as a mix-up prevention system in which a baby or a pet is a target of identification, for example.

In addition, a target of identification can be identified regardless of its location as long as the ID information indicator can be checked, so that it is even possible to identify a product that is not at hand of the purchaser, such as a product sold by the electronic commerce on the Internet, for example.

As described, according to the ID information indicator of this embodiment, the information to be used in the ID information indicator can be reproduced by extracting the base sequence information from saliva or the like of the individual, and this information has an irregular random element sequence unique to each individual which is difficult for the third person to forge or imitate, so that it can be utilized as an effective identification information.

Also, according to the authentication system of this embodiment, the identification of an identification target can be realized easily by simply reading the information from the ID information indicator provided on the identification target. The information to be used for the identification is generated according to the DNA base sequence information unique to each individual, which has an irregular random information element sequence which is difficult for the third person to forge or imitate, so that the reliability of the identification can be improved considerably compared with the conventional.schemes.

In addition, it is possible to improve the identification power by utilizing the repeat count of the STR which has a great individual difference.

Moreover, the digital DNA base sequence information can be read by utilizing the existing device, and the ID information indicator can be provided on the identification target easily by directly printing it on the identification target or by attaching a label or tag with the ID information indicator printed thereon to the identification target.

Furthermore, it is possible to effectively prevent the forgery or the imitation of the ID information indicator by the third person.

It is to be noted that the DNA-ID information used in the above described embodiments can be any genome related information that can identify the individual to be identified in general.

It is also to be noted that the DNA authentication mark in a form of 2D bar code used in the above described embodiments can be any mark or code that encodes the genome related information in general.

It is also to be noted that an article to which the DNA authentication mark, i.e., an identification mark, of the present invention is to be provided is not necessarily limited to the ID card or a label or tag to be attached to a product as described in the above embodiments, and can be any article or product in general.

It is also to be noted that, besides those already mentioned above, many modifications and variations of the above embodiments may be made without departing from the novel and advantageous features of the present invention. Accordingly, all such modifications and variations are intended to be included within the scope of the appended claims.

According to another example, an article having an identification mark may be provided as follows:

1) An article having an identification mark that encodes genome related information capable of identifying an individual to be identified.

2) The article of 1), wherein the identification mark is provided in a form of a two dimensional bar code.

3) The article of 1), wherein the identification mark is provided in a form of an IC equipped medium.

4) The article of 1), wherein the genome related information indicates information obtained from inter-gene regions of DNA directly acquired from the individual.

5) The article of 4), wherein the inter-gene regions are microsatellite regions of the DNA.

6) The article of 1), wherein the genome related information indicates a combination of repeat counts of short tandem repeats in a base sequence of DNA of the individual.

7) The article of 1), wherein the individual is an owner of the article, the article is a portable medium to be carried around by the individual, and the identification mark is used for authenticating the individual.

8) The article of 7), wherein the portable medium is an ID card of the individual.

9) The article of 1), wherein the individual is a representative of a manufacturer of the article, and the identification mark is used for judging authenticity of the article.

10) The article of 1), wherein the individual is a representative of a manufacturer of a product to which the article is to be attached, and the identification mark is used for judging authenticity of the product.

11) The article of 10, wherein the article is a label or tag to be attached to the product.

12) The article of 1), wherein the identification mark is printed on the article.

13) The article of 12), wherein the identification mark is printed by using DNA mixed ink containing DNA or DNA fragment directly acquired from the individual.

14) The article of 12), wherein the identification mark is printed by using invisible ink.

15) The article of 1), also having a recording medium for recording the genome related information.

16) The article of 15), wherein the recording medium is an IC chip provided on the article.

17) The article of 15), wherein the recording medium also records a secret key of the individual for generating a digital signature.

18) The article of 17), wherein the recording medium also records a public key corresponding to the secret key.

19) The article of 17), wherein the secret key is given by a combination of the genome related information and a secret random number.

**EP 1 515 267 A2**

20) The article of 19), wherein the genome related information indicates a combination of repeat counts of short tandem repeats in a base sequence of DNA of the individual.

According to another example, an authentication method utilizing an article having an identification mark may be provided as follows:

21) An authentication method utilizing an article having an identification mark that encodes genome related information capable of identifying an individual to be identified, the method comprising:

extracting a first genome related information indicated by the identification mark of the article; and
judging authenticity by matching the first genome related information with a second genome related information which is registered in advance or obtained from DNA directly acquired from the individual.

22) The method of 21), wherein the judging step judges the authenticity according to whether the first genome related information and the second genome related information coincide or not.

23) The method of 21), wherein the second genome related information indicates a public key of the individual, and the judging step judges the authenticity according to whether the public key as indicated by the second genome related information can be generated from the first genome related information or not.

24) The method of 21), wherein the article has the identification mark which is provided in a form of a two dimensional bar code, and the extracting step extracts the first genome related information by scanning the two dimensional bar code.

25) The method of 21), wherein the identification mark is printed on the article by using DNA mixed ink containing DNA or DNA fragment directly acquired from the individual, and the extracting step extracts the first genome related information by analyzing the DNA or DNA fragment contained in the DNA mixed ink.

26) The method of 25), wherein the judging step judges the authenticity according to whether the first genome related information and the second genome related information that is obtained from DNA directly acquired from the individual coincide or not.

27) The method of 25), further comprising: judging authenticity of the article by checking whether ink of the identification mark is the DNA mixed ink or not.

28) The method of 21), wherein the article also has a recording medium for recording the genome related information, and the Judging step also Judges the authenticity by matching the genome related information and the second genome related information.

29) The method of 28), wherein the judging step judges the authenticity according to whether the genome related information and the second genome related information coincide or not.

30) The method of 28), wherein the second genome related information indicates a public key of the individual, and the judging step judges the authenticity according to whether the public key as indicated by the second genome related information can be generated from the genome related information or not.

31) The method of 21), wherein the individual is an owner of the article, the article is a portable medium carried around by the individual, and the judging step judges the authenticity of the individual.

32) The method of 21), wherein the individual is a representative of a manufacturer of the article, and the judging step judges the authenticity of the article.

33) The method of 21), wherein the individual is a representative of a manufacturer of a product to which the article is to be attached, and the judging step judges the authenticity of the product.

34. The method of 21), wherein the article also has a recording medium for recording a secret key containing the genome related information and a public key corresponding to the secret key, and the method further comprises: authenticating the individual by calculating a public key from the genome related information that is obtained from DNA directly acquired from the individual, and matching a calculated public key and the public key as recorded in the recording medium; and generating a digital signature by using the secret key as recorded in the recording medium, when the individual is authenticated by the authenticating step.

35) The article of 34), wherein the secret key is given by a combination of the genome related information and a secret random number.

According to another example, an authentication system utilizing an article having an identification mark may be provided as follows:

36) An authentication system utilizing an article having an identification mark that encodes genome related information capable of identifying an individual to be identified, the system comprising:

an identification mark reader device configured to extract a first genome related information indicated by the identification mark of the article; and

an authentication device configured to Judge authenticity by matching the first genome related information with a second genome related information that is registered in advance or obtained from DNA directly acquired from the individual.

37) The system of 36), wherein the authentication device judges the authenticity according to whether the first genome related information and the second genome related information coincide or not.

38) The system of 36), wherein the second genome related information indicates a public key of the individual, and the authentication device Judges the authenticity according to whether the public key as indicated by the second genome related information can be generated from the first genome related information or not.

39) The system of 36), wherein the article has the identification mark which is provided in a form of a two dimensional bar code, and the identification mark reader device extracts the first genome related information by scanning the two dimensional bar code.

40) The system of 36), wherein the identification mark is printed on the article by using DNA mixed ink containing DNA or DNA fragment directly acquired from the individual, and the identification mark reader device extracts the first genome related information by analyzing the DNA or DNA fragment contained in the DNA mixed ink.

41) The system of 40), wherein the authentication device judges the authenticity according to whether the first genome related information and the second genome related information that is obtained from DNA directly acquired from the individual coincide or not.

42) The system of 40), further comprising: judging authenticity of the article by checking whether ink of the identification mark is the DNA mixed ink or not.

43) The system of 36), wherein the article also has a recording medium for recording the genome related information, and the authentication device also judges the authenticity by matching the genome related information and the second genome related information.

44) The system of 43), wherein the authentication device judges the authenticity according to whether the genome related information and the second genome related information coincide or not.

45) The system of 43), wherein the second genome related information indicates a public key of the individual, and the authentication device judges the authenticity according to whether the public key as indicated by the second genome related information can be generated from the genome related information or not.

46) The system of 36), wherein the individual is an owner of the article, the article is a portable medium carried around by the individual, and the authentication device judges the authenticity of the individual.

47) The system of 36), wherein the individual is a representative of a manufacturer of the article, and the authentication device Judges the authenticity of the article.

48) The system of 36), wherein the individual is a representative of a manufacturer of a product to which the article is to be attached, and the authentication device judges the authenticity of the product.

49) The system of 36), wherein the article also has a recording medium for recording a secret key containing the genome related information and a public key corresponding to the secret key, and the authentication device also authenticates the individual by calculating a public key from the genome related information that is obtained from DNA directly acquired from the individual, and matching a calculated public key and the public key as recorded in the recording medium, and the system further comprises: a digital signature device configured to generate a digital signature by using the secret key as recorded in the recording medium, when the individual is authenticated by the authentication unit.

50) The article of 49), wherein the secret key is given by a combination of the genome related information and a secret random number.

**Claims**

1. An article (1, 101-104) having an identification mark (13, 113) that encodes genome related information capable of identifying an individual to be identified;
   **characterized in that**
   the individual is a representative of a manufacturer (201) of a product (104) to which the article is to be attached, and the identification mark (13, 113) is used for judging authenticity of the product.

2. The article (1, 101-104) of claim 1, wherein the identification mark (13, 113) is provided in a form of a two dimensional bar code.

3. The article (1, 101-104) of claim 1, wherein the identification mark (13, 113) is provided in a form of an IC equipped medium.

4. The article (1, 101-104) of claim 1, wherein the genome related information indicates information obtained from inter-gene regions of DNA directly acquired from the individual.

5. The article (1, 101-104) of claim 4, wherein the inter-gene regions are microsatellite regions of the DNA.

6. The article (1, 101-104) of claim 1, wherein the genome related information indicates a combination of repeat counts of short tandem repeats in a base sequence of DNA of the individual.

7. The article (1. 101-104) of claim 1, wherein the individual is an owner of the article, the article is a portable medium to be carried around by the individual, and the identification mark (13, 113) is used for authenticating the individual.

8. The article (1, 101-104) of claim 7, wherein the portable medium is an ID card (1) of the individual.

9. The article (1, 101-104) of claim 1, wherein the individual is a representative of a manufacturer (201) of the article, and the identification mark (13, 113) is used for judging authenticity of the article.

10. The article (1, 101-104) of claim 9, wherein the article is a label or tag to be attached to the product (104).

11. The article (1, 101-104) of claim 1, wherein the identification mark (13, 113) is printed on the article.

12. The article (1, 101-1014) of claim 11, wherein the$^e$ identification mark (13, 113) is printed by using DNA mixed ink containing DNA or DNA fragment directly acquired from the individual.

13. The article (1, 101-104) of claim ii, wherein the identification mark (13, 113) is printed by using invisible ink.

14. The article (1, 101-104) of claim 1, also having a recording medium {11) for recording the genome related information.

15. The article (1, 101-104) of claim 14, wherein the recording medium (11) is an IC chip (11) provided on the article.

16. The article (1, 101-104) of claim 14, wherein the recording medium (11) also records a secret key of the individual for generating a digital signature.

17. The article (1, 101-104) of claim 16, wherein the recording medium (11) also records a public key corresponding to the secret key.

18. The article (1, 101-104) of claim 16, wherein the secret key is given by a combination of the genome related information and a secret random number.

19. The article (1, 101-104) of claim 18, wherein the genome related information indicates a combination of repeat counts of short tandem repeats in a base sequence of DNA of the individual.

20. An authentication method utilizing an article (1, 101-104) having an identification mark (13, 113) that encodes genome related information capable of identifying an individual to be identified, the method comprising:

extracting a first genome related information indicated by the identification mark of the article; and
judging authenticity by matching the first genome related information with a second genome related information (77, P) which is registered in advance (77) or obtained from DNA directly acquired (P) from the individual;

**characterized in that**
the individual is a representative of a manufacturer (201) of a product (104) to which the article is to be attached, and the identification mark (13, 113) is used for judging authenticity of the product.

21. The method of claim 20, wherein the judging step judges the authenticity according to whether the first genome related information and the second genome related information (77, P) coincide or not.

**22.** The method of claim 20, wherein the second genome related information (77, P) indicates a public key of the individual, and the judging step judges the authenticity according to whether the public key as indicated by the second genome related information (77, P) can be generated from the first genome related information or not.

**23.** The method of claim 20, wherein the article (1, 101-104) has the identification mark (13, 113) which is provided in a form of a two dimensional bar code (13, 113), and the extracting step extracts the first genome related information by scanning the two dimensional bar code.

**24.** The method of claim 20, wherein the identification mark (13, 113) is printed on the article (1, 101-104) by using DNA mixed ink containing DNA or DNA fragment directly acquired from the individual, and the extracting step extracts the first genome related information by analyzing the DNA or DNA fragment contained in the DNA mixed ink.

**25.** The method of claim 24, wherein the judging step judges the authenticity according to whether the first genome related information and the second genome related information (77, P) that is obtained from DNA directly acquired (P) from the individual coincide or not.

**26.** The method of claim 24, further comprising:

judging authenticity of the article (1, 101-104) by checking whether ink of the identification mark (13, 113) is the DNA mixed ink or not.

**27.** The method of claim 20, wherein the article also has a recording medium (11) for recording the genome related information, and the judging step also judges the authenticity by matching the genome related information and the second genome related information (77, P).

**28.** The method of claim 27, wherein the judging step judges the authenticity according to whether the genome related information and the second genome related information (77, P) coincide or not.

**29.** The method of claim 27, wherein the second genome related information (77, P) indicates a public key of the individual, and the judging step judges the authenticity according to whether the public key as indicated by the second genome related information (77, P) can be generated from the genome related information or not.

**30.** The method of claim 20, wherein the individual is an owner of the article, the article is a portable medium carried around by the individual, and the judging step judges the authenticity of the individual.

**31.** The method of claim 20, wherein the individual is a representative of a manufacturer (201) of the article, and the judging step judges the authenticity of the article.

**32.** The method of claim 20, wherein the individual is a representative of a manufacturer (201) of a product (104) to which the article is to be attached, and the judging step judges the authenticity of the product.

**33.** The method of claim 20, wherein the article also has a recording medium (11) for recording a secret key containing the genome related information and a public key corresponding to the secret key, and the method further comprises:

authenticating the individual by calculating a public key from the genome related information that is obtained from DNA directly acquired (P) from the individual, and matching a calculated public key and the public key as recorded in the recording medium (11); and
generating a digital signature by using the secret key as recorded in the recording medium (ii), when the individual is authenticated by the authenticating step.

**34.** The method of claim 33, wherein the secret key is given by a combination of the genome related information and a secret random number.

**35.** An authentication system utilizing an article (1, 101-104) having an identification mark {13, 113) that encodes genome related information capable of identifying an individual to be identified, the system comprising:

a identification mark reader device (3, 33) configured to extract a first genome related information indicated by the identification mark (13, 113) of the article; and

an authentication device (5, 51) configured to judge authenticity by matching the first genome related information with a second genome related information (77, P) that is registered in advance (77) or obtained from DNA directly acquired (P) from the individual;

**characterized in that**

the individual is a representative of a manufacturer (201) of a product (104) to which the article is to be attached, and the identification mark (13, 113) is used for judging authenticity of the product.

36. The system of claim 35, wherein the authentication device (5, 51) is adapted to judge the authenticity according to whether the first genome related information and the second genome related information (77, P) coincide or not.

37. The system of claim 35, wherein the second genome related information (77, P) indicates a public key of the individual, and the authentication device (5, 51) is adapted to judge the authenticity according to whether the public key as indicated by the second genome related information (77, P) can be generated from the first genome related information or not.

38. The system of claim 35, wherein the article (1, 101-104) has the identification mark (13, 113) which is provided in a form of a two dimensional bar code, and the identification mark reader device (3, 33) is adapted to extract the first genome related information by scanning the two dimensional bar code.

39. The system of claim 35, wherein the identification mark (13, 113) is printed on the article (1, 101-104) by using DNA mixed ink containing DNA or DNA fragment directly acquired from the individual, and the identification mark reader device (3, 33) is adapted to extract the first genome related information by analyzing the DNA or DNA fragment contained in the DNA mixed ink.

40. The system of claim 39, wherein the authentication device (5, 51) is adapted to judge the authenticity according to whether the first genome related information and the second genome related information (77, P) that is obtained from DNA directly acquired (P) from the individual coincide or not.

41. The system of claim 39, wherein the authentication device (5, 51) is adapted to judge the authenticity of the article by checking whether ink of the identification mark is the DNA mixed ink or not.

42. The system of claim 35, wherein the article (1, 101-104) also has a recording medium (11) for recording the genome related information, and the authentication device (5, 51) is also adapted to judge the authenticity by matching the genome related information and the second genome related information (77, P).

43. The system of claim 42, wherein the authentication device (5, 51) is adapted to judge the authenticity according to whether the genome related information and the second genome related information (77, P) coincide or not.

44. The system of claim 42, wherein the second genome related information (77, P) indicates a public key of the individual, and the authentication device is adapted to judge the authenticity according to whether the public key as indicated by the second genome related information (77, P) can be generated from the genome related information or not.

45. The system of claim 35, wherein the individual is an owner of the article, the article is a portable medium carried around by the individual, and the authentication device (5, 51) is adapted to judge the authenticity of the individual.

46. The system of claim 35, wherein the individual is a representative of a manufacturer (201) of the article, and the authentication device (5, 51) is adapted to judge the authenticity of the article.

47. The system of claim 35, wherein the individual is a representative of a manufacturer (201) of a product (104) to which the article is to be attached, and the authentication device is adapted to judge the authenticity of the product.

48. The system of claim 35, wherein the article (1, 101-104) also has a recording medium (11) for recording a secret key containing the genome related information and a public key corresponding to the secret key, and the authentication device (5, 51) is also adapted to authenticate the individual by calculating a public key from the genome related information that is obtained from DNA directly acquired from the individual, and matching a calculated public key and the public key as recorded in the recording medium (11), and the system further comprises:

a digital signature device (51b) configured to generate a digital signature by using the secret key as recorded in the recording medium (11), when the individual is authenticated by the authentication unit (5, 51).

49. The system of claim 48, wherein the secret key is given by a combination of the genome related information and a secret random number.

# FIG.1A

[FRONT]                                          15

1

DNA
REGISTERED
SEAL IC CARD

11

DaTa △         △○△Corp.

13

# FIG.1B

[BACK]

△○△Corp.

# FIG.2

**CERTIFICATE AUTHORITY** (REGISTERING & VERIFYING DNA-ID INFORMATION)

7 — SERVER DEVICE

**PORTABLE RECORDING MEDIUM**

1 — DNA REGISTERED SEAL IC CARD

11 — IC CHIP

15

13

**DNA INFORMATION PROCESSING UNIT** — 9

DNA DATA ACQUISITION UNIT (ACQUIRING DNA INFORMATION FROM DNA FRAGMENT) — 91

DNA-ID GENERATION UNIT (GENERATING DNA-ID FROM OBTAINED DNA INFORMATION) — 93

3 — 31 — IC CARD R/W

33 — AUTHENTICATION MARK READER (2D BAR CODE SCANNER)

**CLIENT DEVICE** 51a — 5

MATCHING UNIT (INDIVIDUAL AUTHENTICATION FUNCTION)

P — BIOLOGICAL INFORMATION (MOUTH CELLS + SALIVA)

35 — DNA INFORMATION EXTRACTION UNIT

37 — DNA-ID GENERATION UNIT

SIGNING UNIT (DIGITAL SIGNATURE FUNCTION) — 51b

(INDIVIDUAL AUTHENTICATION RESULT OR DIGITAL SIGNATURE OUTPUT)

**SENSOR TERMINAL DEVICE**

51

EP 1 515 267 A2

# FIG.3

**1** DNA REGISTERED SEAL IC CARD
- **11** IC CHIP
  - **111** DNA-ID INFORMATION
  - **113** CARD MANAGER
  - **115** CARD OS
- **13** DNA AUTHENTICATION MARK (INVISIBLE / VISIBLE 2D BAR CODE)

**3** SENSOR TERMINAL DEVICE
- **31** IC CARD R/W
  - **311** CARD TERMINAL MANAGER
  - **313** CARD TERMINAL OS
- **33** AUTHENTICATION MARK READER (2D BAR CODE SCANNER)
- **P** BIOLOGICAL INFORMATION (MOUTH CELLS + SALIVA)
- **35** DNA INFORMATION EXTRACTION UNIT
- **37** DNA-ID GENERATION UNIT

**5** CLIENT DEVICE
- **51** CLIENT APPLICATION (MATCHING , SIGNING)
- **53** CLIENT MANAGER
- **55** CLIENT OS

**7** SERVER DEVICE (CA FUNCTION)
- **71** SERVER APPLICATION
- **73** SERVER MANAGER
- **75** SERVER OS
- **77** DNA-ID INFORMATION

EP 1 515 267 A2

## FIG.4

DNA AUTHENTICATION MARK

33a

⟨AUTHENTICATION MARK READING⟩ — 3

CCD

2D BAR CODE SCANNER — 33

⟨AUTHENTICATION⟩ — 5

PUBLIC KEY ANALYSIS UNIT — 51c

$Y_A$

MATCHING UNIT? — 51a

$Y_A$

MEMORY UNIT (DB) — 51d

(COINCIDE / NOT COINCIDE)

CA — 7

# FIG.5

FIG.6A

DaTa△ ～113

～DOCUMENT 101

FIG.6B

DaTa△ ～113

～NAME CARD 102

FIG.6C

～SECURITY PAPER 103

DaTa△ ～113

FIG.6D

□ ～113

～PRODUCT 104

# FIG.7

```
┌─────────────────────────────┐
│      DNA EXTRACTION          │──S1
└─────────────────────────────┘
              │
              ▼
┌─────────────────────────────┐
│  ID INFORMATION REGISTRATION │──S2
└─────────────────────────────┘
              │
              ▼
┌─────────────────────────────┐
│   ID INFORMATION INDICATOR   │──S3
│         ATTACHING            │
└─────────────────────────────┘
              │
              ▼
┌─────────────────────────────┐
│  PRODUCT DISTRIBUTION,       │──S4
│  ID INFORMATION PRESENTATION │
└─────────────────────────────┘
              │
              ▼
┌─────────────────────────────┐
│    AUTHENTICATION REQUEST    │──S5
└─────────────────────────────┘
              │
              ▼
┌─────────────────────────────┐
│     INFORMATION READING      │──S6
└─────────────────────────────┘
              │
              ▼
          ╱S7╲
        ╱      ╲
      ╱ INFORMATION ╲    NO
     ╱  MATCHING ?   ╲─────────────┐
      ╲            ╱               │
        ╲       ╱                  │
          ╲  ╱                     │
          YES    S8                │    S9
           │                       │
           ▼                       ▼
┌─────────────────────────┐   ┌─────────────────────────┐
│  AUTHENTICATION RESULT   │   │  AUTHENTICATION RESULT   │
│       (AUTHENTIC)        │   │     (NOT AUTHENTIC)      │
└─────────────────────────┘   └─────────────────────────┘
```

# FIG.8

S4 : PRODUCT
DISTRIBUTION

202
WHOLESALER

201
MANUFACTURER

S4 : PRODUCT
DISTRIBUTION

S4 : ID INFORMATION
PRESENTATION

203
RETAIL STORE

S5 : AUTHENTICATION
REQUEST

204
CONSUMER

S8,S9 :
RESULT NOTIFICATION